Europäisches Patentamt

European Patent Office

Office européen des brevets

(11) Numéro de publication: **0 231 543**
**A1**

## (12) DEMANDE DE BREVET EUROPEEN

(21) Numéro de dépôt: 86202228.2

(22) Date de dépôt: **10.12.86**

(51) Int. Cl.⁴ **B01D 53/34**

(30) Priorité: **17.12.85 FR 8518674**

(43) Date de publication de la demande:
**12.08.87 Bulletin 87/33**

(84) Etats contractants désignés:
**DE FR GB IT NL**

(71) Demandeur: **Laboratoires d'Electronique et de Physique Appliquée L.E.P.**
**3, Avenue Descartes**
**F-94450 Limeil-Brévannes(FR)**
**FR**
Demandeur: **N.V. Philips' Gloeilampenfabrieken**
**Groenewoudseweg 1**
**NL-5621 BA Eindhoven(NL)**
**DE GB IT NL**

(72) Inventeur: **Berth, Michel Société Civile S.P.I.D.**
**209 rue de l'Université**
**F-75007 Paris(FR)**
Inventeur: **Laporte, Gilbert Société Civile S.P.I.D.**
**209 rue de l'Université**
**F-75007 Paris(FR)**

(74) Mandataire: **Landousy, Christian et al**
**Société Civile S.P.I.D. 209, Rue de l'Université**
**F-75007 Paris(FR)**

(54) **Dispositif antipollution pour l'élimination des gaz toxiques utilisés dans l'élaboration des matériaux semiconducteurs du groupe III-V.**

(57) Dispositif antipollution pour l'élimination des gaz toxiques utilisés dans l'élaboration des matériaux semiconducteurs du groupe III-V, ces gaz toxiques étant typiquement l'arsine et/ou la phosphine en atmosphère d'hydrogène associés ou non à des traces de chlore, de gallium, d'indium et/ou d'aluminium, caractérisé en ce qu'il est formé d'une chambre de combustion dont les parois externes sont refroidies, qui reçoit par une première entrée l'hydrogène auquel sont mélés les gaz et produits à éliminer, et qui reçoit par une seconde entrée de l'oxygène gazeux, sous une pression contrôlée pour que l'association de l'oxygène et de l'hydrogène soit différente de la composition du mélange dit "détonnant", en ce que l'hydrogène forme dans l'oxygène une flamme dite "de diffusion" alimentée par des moyens d'allumages et dans laquelle les produits à éliminer sont brûlés, en ce que les résidus de cette combustion qui sont notamment l'anhydride arsénieux et/ou l'acide phosphorique et dans tous les cas de l'eau, sont recueillis sur une sortie munie de moyens de régulation de la pression et dirigés vers des moyens de stockage, et en ce qu'il comprend en outre des moyens de contrôle de la sécurité.

FIG 1

## DISPOSITIF ANTIPOLLUTION POUR L'ELIMINATION DES GAZ TOXIQUES UTILISES DANS L'ELABORATION DES MATERIAUX SEMICONDUCTEURS DU GROUPE III-V

L'invention concerne un dispositif antipollution pour l'élimination des gaz toxiques utilisés dans l'élaboration des matériaux semiconducteurs du groupe III-V, ces gaz toxiques étant typiquement l'arsine et/ou la phosphine et atmosphère d'hydrogène associés ou non à des traces de chlore, de gallium, d'indium et/ou d'aluminium.

L'invention concerne en outre un procédé mettant en oeuvre ce dispositif.

L'invention trouve son application en fin de cycle d'élaboration de matériaux semiconducteurs de groupe III-V, tels que l'arséniure de gallium, et/ou d'indium, et/ou d'aluminium, ou encore le phosphure d'indium, par des procédés d'épitaxie en phase vapeur. Ces procédés incluent l'utilisation de produits gazeux comme l'arsine ($AsH_3$) ou la phosphine ($PH_3$) en atmosphère d'hydrogène, associés par exemple à des organo-métalliques.

En sortie des dispositifs d'élaboration de couches épitaxiales de ces matériaux, utilisés pour réaliser des éléments actifs comme des transistors ou des diodes dans des circuits intégrés, les gaz toxiques ne peuvent être évacués vers l'atmosphère pour des raisons de sécurité évidentes.

Dans l'état actuel de la technique, les produits nocifs tels que l'arsine ou la phosphine sont traités par un procédé connu de "cracking". Selon ce procédé les produits sont soumis à des cycles, pendant lesquels leur concentration diminue dans certaine proportion.

Ainsi, en ce qui concerne l'arsine ($AsH_3$), après chaque passage dans le four de cracking, le composé nocif restant est environ 1/3000 de composé nocif entrant. Mais il faut cependant plusieurs passages pour admettre que le produit restant est, en quantité, en dessous d'un seuil de nocivité tolérable, car le produit nocif n'est jamais complètement éliminé. De plus ce procédé fournit en sortie de l'hydrogène qui présente des dangers d'explosions incontrôlées.

En ce qui concerne la phosphine le problème est encore plus important, car non seulement à chaque passage dans le four de "cracking" le composé nocif restant est encore 1/14 du composé entrant, ce qui nécessite de très nombreux cycles avant d'atteindre le seuil tolérable, mais encore les résidus de ce procédé sont extrêmement gênants puisqu'il s'agit principalement de phosphure blanc qui est inflammable à l'oxygène de l'air, et d'hydrogène qui est dangereux pour les raisons déjà citées.

C'est pourquoi la présente invention propose un dispositif qui permet de résoudre ces problèmes.

Selon l'invention ce but est atteint au moyen d'un dispositif tel que défini dans le préambule, caractérisé en ce qu'il est formé d'une chambre de combustion dont les parois externes sont refroidies, qui reçoit par une première entrée l'hydrogène auquel sont mélés les gaz et produits à éliminer, et qui reçoit par une seconde entrée de l'oxygène gazeux, sous une pression contrôlée pour que l'association de l'oxygène et de l'hydrogène soit différente de la composition du mélange dit "détonnant", en ce que l'hydrogène forme dans l'oxygène une flamme dite "de diffusion" alimentée par des moyens d'allumages et dans laquelle les produits à éliminer sont brûlés, en ce que les résidus de cette combustion qui sont notamment l'anhydride arsénieux et/ou l'acide phosphorique et dans tous les cas de l'eau, sont recueillis sur une sortie munie de moyens de régulation de la pression et dirigés vers des moyens de stockage, et en ce qu'il comprend en outre des moyens de contrôle de la sécurité.

Le dispositif selon l'invention présente entre autres les avantages suivants :

- ce dispositif est simple ;
- la méthode qui le met en oeuvre est peu onéreuse puisqu'elle n'implique que de disposer d'oxygène, produit d'usage courant dans les laboratoires et en usine ;
- la méthode est rapide puisqu'elle n'implique pas, contrairement au "cracking", de nombreux recyclages. Les produits de combustion de l'arsine et/ou de la phosphine sont obtenus immédiatement ;
- la méthode fournit des produits de décomposition qui peuvent être peu nocifs, tel l'acide phosphorique issu de la décomposition de la phosphine ;
- la méthode fournit des produits de décomposition qui sont en tous les cas facilement récupérables en conteneur et stockables sans danger ;
- cette méthode permet de maîtriser entièrement le processus antipollution associé à la fabrication des semiconducteurs du groupe III-V. Il ne reste pas d'évacuation de traces d'arsine ou de phosphine dans l'atmosphère.

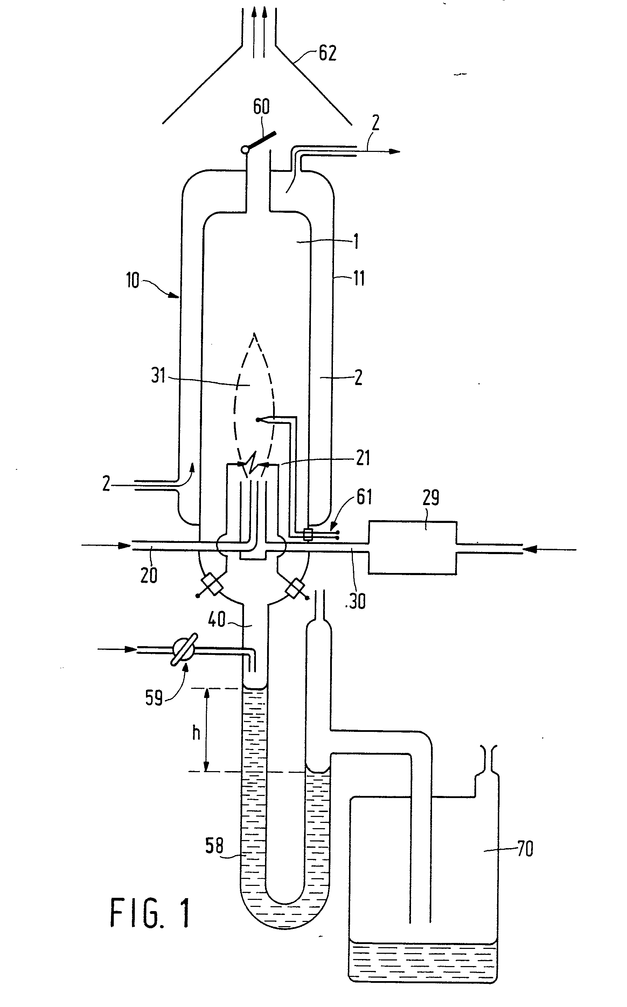

L'invention sera mieux comprise à l'aide de la description suivante illustrée par la figure 1 annexée.

On rappelle pour mémoire que la fabrication des dispositifs semiconducteurs tels que les circuits intégrés ultrarapides ou hyperfréquences impliquent l'élaboration de couches minces monocristallines de composés semiconducteurs divers comme par exemple : GaAlAs, GaInAs, ou même InP. La réalisation de ces couches peut être faite à partir de substrats massifs, commen par exemple l'arséniure de gallium (GaAs) ou le phosphure d'indium (InP) ou d'autres composés du groupe III-V, par croissance épitaxiale en phase gazeuse, en présence par exemple d'organo-métalliques, à partir de gaz comme l'arsine (AsH₃) ou la phosphine - (PH₃) en atmosphère d'hydrogène.

Mais ces gaz (arsine, phosphine, hydrogène) ne sont pas complètement utilisés dans les réactions formant les couches épitaxiales. Ils doivent donc ensuite être récupérés et éliminés puisque leur toxicité interdit de les dissiper dans l'atmosphère.

Selon l'invention ces gaz d'arsine et/ou phosphine sont brûlés dans une flamme de diffusion réalisée par la combustion de l'hydrogène, auquel ils sont mêlés, dans de l'oxygène.

Cette opération est réalisée dans une chambre de combustion 10 représentée sur la figure 1. Cette chambre comporte une enceinte 1, dont les parois sont refroidies.

Dans l'exemple de réalisation de la chambre de combustion, proposé figure 1, l'enceinte est entourée par une double paroi 11 dans laquelle circule un liquide de refroidissement 2 qui peut être de l'eau par exemple.

L'hydrogène, issu d'un réacteur d'élaboration de couches épitaxiales en phase vapeur, et donc mêlé d'arsine et/ou de phosphine ainsi que d'un certain nombre d'autres éléments sous forme de traces (Ga,Al, organo-métalliques etc...), est introduit sous pression contrôlée, dans la chambre de combustion 10, par l'entrée 20.

L'oxygène, issu d'une source externe comme par exemple des bouteilles, est introduit, sous pression contrôlée par le dispositif de contrôle 29 par une entrée différente 30.

L'hydrogène peut être enflammé par l'éclateur 21 qui fournit une étincelle. Cette étincelle est maintenue en permanence.

Une flamme 31 dite "de diffusion" dont le principe physique ne sera pas rappelé ici, comme étant bien connu de l'homme du métier, se forme alors dans la chambre de combustion.

Dans ces conditions, l'arsine est brûlée et fournit d'une part de l'anhydride arsénieux (As₂O₃) sous forme d'une poudre, et d'autre part de l'eau (H₂O).

La phosphine est brûlée et fournit d'une part, par recombinaison avec l'eau, de l'acide phosphorique (PO₄H₃) et d'autre part de l'eau (H₂O).

Selon l'invention, les produits de la combustion, As₂O₂ et/ou PO₄H₃ sont entraînés par l'eau vers une sortie 40 et recueillis par exemple dans des conteneurs 70. Ces produits peuvent être amenés dans le conteneur 70 par l'intermédiaire d'un système de syphon 58. Une différence de niveau $\underline{h}$ peut ainsi s'établir dans le syphon du fait des différences de pression entre la chambre et l'atmosphère et permet ainsi, de façon simple, d'obtenir un équilibre entre ces milieux.

Des dispositifs de sécurité en pression - (soupages) sont en outre prévus en 60 ainsi que des dispositifs de récupération des gaz toxiques qui pourraient s'échapper par ces soupages (par exemple aspiration par hotte 62 et stockage des gaz échappés).

En outre un dispositif 61 du genre thermostat, qui peut être un thermocouple par exemple, est prévu pour couper l'arrivée d'hydrogène et d'oxygène en cas d'extinction de la flamme.

Eventuellement un liquide de lavage peut être introduit par un robinet 59 pour entraîner plus vite ou plus facilement la poudre d'anhydride arsénieux. Ce liquide de lavage peut être par exemple de la soude ou de la potasse concentrée.

On notera qu'aucun des produits issus de la combustion de l'arsine ou de la phosphine ne pose de problème de stockage.

En effet l'acide phosphorique ne présente pas une forte toxicité, et l'anhydride arsénieux est facilement récupérable du fait qu'il est en poudre. Le produit supplémentaire, qui est l'eau, est très favorable au bon fonctionnement du dispositif puisqu'il permet précisément d'entraîner les autres produits dans les conteneurs.

On ne trouve donc plus ici de produits inflammables, ou de traces toxiques résiduelles non éliminables.

Le dispositif selon l'invention procure encore un avantage inattendu, mais non négligeable.

L'entrée 20 sert automatiquement de pompe pour l'hydrogène mêlé de l'arsine, phosphine etc..., qui y sont introduit, compte tenu des rapports de pressions qui règnent dans la chambre de combustion et dans le réacteur de couches épitaxiales. Ceci constitue un avantage appréciable pour le bon fonctionnement de ce réacteur d'épitaxie.

**Revendications**

1. Dispositif antipollution pour l'élimination des gaz toxiques utilisés dans l'élaboration des matériaux semiconducteurs du groupe III-V, ces gaz toxiques étant typiquement l'arsine et/ou la phosphine en atmosphère d'hydrogène associés ou non à des traces de chlore, de gallium, d'indium et/ou d'aluminium, caractérisé en ce qu'il est formé d'une chambre de combustion dont les parois externes sont refroidies, qui reçoit par une première entrée l'hydrogène auquel sont mêlés les gaz et produits à éliminer, et qui reçoit par une seconde entrée de l'oxygène gazeux, sous une pression contrôlée pour que l'association de l'oxygène et de l'hydrogène soit différente de la composition du mélange dit "détonnant", en ce que l'hydrogène forme dans l'oxygène une flamme dite "de diffusion" alimentée par des moyens d'allumages et dans laquelle les produits à éliminer sont brûlés, en ce que les résidus de cette combustion qui sont notamment l'anhydride arsénieux et/ou l'acide phosphorique et dans tous les cas de l'eau, sont recueillis sur une sortie munie de moyens de régulation de la pression et dirigés vers des moyens de stockage, et en ce qu'il comprend en outre des moyens de contrôle de la sécurité.

2. Dispositif selon la revendication 1, caractérisé en ce que les parois externes de la chambre de combustion sont doubles et qu'une circulation d'un liquide assure le refroidissement.

3. Dispositif selon la revendication 2, caractérisé en ce que le liquide de refroidissement est de l'eau.

4. Dispositif selon l'une des revendications 1 à 3, caractérisé en ce que les moyens d'allumage de la flamme de diffusion sont constitués par une étincelle maintenue en permanence pendant tout le processus.

5. Dispositif selon l'une des revendications 1 à 4, caractérisé en ce que les moyens de stockage sont des conteneurs.

6. Dispositif selon l'une des revendications 1 à 5, caractérisé en ce que les moyens de régulation de pression placés sur la sortie sont constitués par un système de syphon.

7. Dispositif selon l'une des revendications 1 à 6 caractérisé en ce qu'un liquide de lavage peut être introduit au niveau de la sortie pour entraîner plus vite les résidus de la combustion.

8. Dispositif selon la revendication 7, caractérisé en ce que ce liquide est choisi parmi la soude ou la potasse.

9. Dispositif selon l'une des revendications 1 à 8, caractérisé en ce que les moyens de contrôle de la sécurité comprennent un thermo-couple qui contrôle la présence de la flamme, et coupent l'arrivée des gaz en cas d'extinction de cette dernière.

10. Dispositif selon l'une des revendications 1 à 9, caractérisé en ce que les moyens de contrôle de la sécurité comprennent une soupape qui permet l'échappement des gaz en cas de surpression et une hotte de récupération de ces gaz.

11. Procédé pour la mise en oeuvre du dispositif conforme à l'une des revendications 1 à 10, caractérisé en ce qu'il comprend les étapes de :

a) mise en marche du dispositif d'allumage ;

b) introduction de l'hydrogène mêlé aux gaz polluants par la première entrée ;

c) introduction, par la seconde entrée, de l'oxygène pour former une flamme dite "de diffusion" ;

d) récupération des produits de la combustion dans les moyens de stockage.

FIG. 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | JAPANESE PATENTS REPORT, vol. 81, no. 40, 30 octobre 1981, Chemical Engineering, (J8), page 2, Derwent Publications Ltd, Londres, GB; & JP-A-81 041 292 (NISHI NIPPON KAKOKI K.K.) 28-09-1981 * Résumé * | 1 | B 01 D 53/34 |
| A | Idem | 11 | |

-----

| | | | DOMAINES TECHNIQUES RECHERCHES (Int. Cl.4) |
|---|---|---|---|
| | | | B 01 D 53/00 |

Le present rapport de recherche a ete etabli pour toutes les revendications

| Lieu de la recherche | Date d'achevement de la recherche | Examinateur |
|---|---|---|
| LA HAYE | 30-03-1987 | BOGAERTS M.L.M. |